# EUROPÄISCHE PATENTSCHRIFT

(11) **EP 3 137 948 B1**
(45) Veröffentlichungstag und Bekanntmachung des Hinweises auf die Patenterteilung: **23.03.2022**
(21) Anmeldenummer: 15723163.0
(22) Anmeldetag: 30.04.2015
(51) Int. Cl.: G05B 9/02, G05B 19/406

(54) **VORRICHTUNG UND VERFAHREN ZUM FEHLERSICHEREN ÜBERWACHEN EINES BEWEGLICHEN MASCHINENTEILS**
DEVICE AND METHOD FOR FAILSAFE MONITORING OF A MOVING MACHINE PART
DISPOSITIF ET PROCÉDÉ DE SURVEILLANCE D'UNE PARTIE DE MACHINE MOBILE AVEC PROTECTION CONTRE LES ERREURS

(30) Priorität: 02.05.2014 DE 102014106166
(43) Veröffentlichungstag der Anmeldung: 08.03.2017
(73) Patentinhaber: Pilz GmbH & Co. KG, 73760 Ostfildern (DE)
(72) Erfinder: SCHLECHT, Michael, 73760 Ostfildern (DE)
(74) Vertreter: Witte, Weller & Partner Patentanwälte mbB
(86) Internationale Anmeldenummer: PCT/EP2015/059532
(87) Internationale Veröffentlichungsnummer: WO 2015/166058

(56) Entgegenhaltungen:
- EP-A2- 1 736 842
- DE-A1-102006 046 286
- DE-A1-102007 063 099

## Beschreibung

Die vorliegende Erfindung betrifft eine Vorrichtung zum fehlersicheren Überwachen einer Anzahl an Durchläufen eines beweglichen Maschinenteils durch einen definierten Bewegungsbereich mit einer fehlersicheren Auswerteeinheit zum Bereitstellen eines fehlersicheren Abschaltsignals.

Ferner betrifft die vorliegende Erfindung ein Verfahren zum fehlersicheren Überwachen einer Anzahl an Durchläufen eines beweglichen Maschinenteils durch einen definierten Bewegungsbereich.

Die vorliegende Erfindung betrifft insbesondere den Bereich der Maschinen- und Anlagensicherheit. Grundsätzlich ist der Betrieb moderner Maschinen und Anlagen in ein umfangreiches Sicherheitskonzept eingebunden, ganz gleich, ob es sich um Werkzeugmaschinen wie Bearbeitungszentren, Pressen, Montageanlagen oder Roboter handelt. Allerdings gehen von vielen Maschinen und Anlagen aufgrund der schnellen, hochautomatisierten Abläufe Gefahren für Personen, Güter und Prozesse aus, die auf den ersten Blick kaum zu erkennen sind. Daher gibt es eine Reihe von Richtlinien, Normen und Gesetzen, die bestimmte Sicherheitsvorkehrungen vorschreiben, die bei der Umsetzung von technischen Anlagen zu berücksichtigen sind.

Einschlägige Normen sind u.a. die EN ISO 12100:2010 als die zentrale Norm für Maschinensicherheit, die EN ISO 13849-1 (Nachfolger der EN 954-1) als die zentrale Norm für die Auslegung sicherheitsgerichteter Steuerungen im Bereich "Maschinensicherheit" und die IEC 61508, die Anforderungen an Sicherheitssysteme in der Anlagensicherheit unabhängig von der Anwendung definiert. Die vorliegende Erfindung betrifft insbesondere Vorrichtungen die hinsichtlich der funktionalen Sicherheit eine Safety Integrity Level (SIL) Einstufung von mindestens SIL-2 aufweisen oder einen Perfomance Level größer PL_{c} erreichen, wobei der Performance Level gemäß der EN ISO 13849-1 die Wahrscheinlichkeit eines gefahrbringenden Ausfalls pro Stunde beschreibt.

EP 1 736 842 A1 offenbart beispielhaft eine Maschinensteuerung zur Steuerung einer gefahrbringenden Maschine, wie beispielweise einer Presse, die eine schnelle Abschaltung ermöglicht, indem für zeitkritische Steuerbefehle eine von einer Zykluszeit der Maschinensteuerung unabhängige Logik verwendet wird.

Für automatisiert arbeitende technische Anlagen müssen unterschiedliche Sicherheitsaspekte berücksichtigt werden. Zum einen muss sichergestellt werden, dass kein unberechtigter Zutritt oder Zugang durch Personen oder Güter zum zugeordneten Wirkungsbereich der Maschine erfolgt, bzw. der bewegliche Maschinenteil in solch einem Fall sicher in einen ungefährlichen Zustand überführt wird. Weiterhin muss sichergestellt werden, dass der bewegliche Maschinenteil den zugeordneten Wirkungsbereich selbst nicht verlässt, beispielsweise indem der bewegliche Maschinenteil Endpunkte seiner Bewegungsachsen überschreitet oder anderweitig aus einer vorgegebenen mechanischen Begrenzung ausbricht. Hierdurch können einerseits Teile der technischen Anlage oder der bewegliche Maschinenteil selbst ganz oder teilweise beschädigt oder zerstört werden, wodurch zeit- und kostenintensiven Reparaturen notwendig werden könnten. Andererseits kann ein aus seinem Wirkungsbereich austretender beweglicher Maschinenteil zusätzliche Gefahren für Personen und Güter darstellen, die nicht von der zuvor erwähnten Zutrittsüberwachung erfasst sind.

Die Überwachung einer technischen Anlage, die bewegliche Maschinenteile aufweist, von denen eine Gefahr ausgehen kann, erfordert somit regelmäßig zwei, oft voneinander getrennte Überwachungseinrichtungen. Einerseits findet eine Bereichsabsicherung statt, um den Zugang durch Personen einzuschränken oder Durchgangs- oder Durchreich-Bereichen zu überwachen, wobei regelmäßig Mauern, stabile Schutzgitter oder elektro-mechanische bzw. opto-elektronische Schutzeinrichtungen verwendet werden. Andererseits muss ein beweglicher Maschinenteil selbst dahingehend überwacht werden, dass er sich innerhalb seines Wirkungsbereichs befindet. Dieses erfolgt in der Regel mit Positionsschalten, Lichtgittern oder kamerabasierten Schutzeinrichtungen, mit denen die Grenzen des Wirkungsbereiches kontrolliert werden, um so ein Austreten aus dem Wirkungsbereich zu registrieren. Alternativ kann auch unmittelbar die jeweilige Position des beweglichen Maschinenteils sicherheitsrelevant bestimmt werden.

Bei großen Anlagen, beispielsweise Fertigungsstraßen im Automobilbau, bei denen eine Vielzahl von technischen Anlagen mit beweglichen Maschinenteilen überwacht werden muss, kann ein Überwachung und das zugehörige Sicherheitskonzept sehr komplex und aufwendig werden. Insbesondere da eine sicherheitsrelevant, fehlersichere Überwachung oft durch eine redundante Überwachung realisiert wird, wodurch sich die Anzahl der verwendeten Schutzeinrichtungen, insbesondere die Sensor- und Aktoranordnungen, regelmäßig verdoppelt. Es ist daher grundsätzlich wünschenswert, die Anzahl der Schutzeinrichtung auf ein Minimum zu reduzieren und gleichzeitig eine normgemäße Sicherheit zu gewährleisten.

Darüber hinaus wird die Überwachung eines Wirkungsbereiches einer technischen Anlage aufgrund zunehmend intelligenter Maschinen, wie beispielsweise computergesteuerte, automatisiert arbeitende Roboter, immer aufwendiger, da sich der Wirkbereich oft nicht mehr in klare Grenzen fassen lässt. Für komplexe Unterteilungen des Wirkbereiches, bei denen auch Teilbereiche innerhalb des Wirkungsbereiches überwacht werden müssen, kann die Anzahl der benötigten Sensoren daher schnell ansteigen, insbesondere wenn jede physikalische und jede freidefinierte Grenze aufgrund der normgemäßen Fehlersicherheit, wie zuvor erwähnt, redundant überwacht werden muss.

Darüber hinaus ist in einigen Anwendungsbereichen eine Verwendung von einfachen Positionssensoren an den Grenzen des Wirkungsbereiches überhaupt nicht möglich, beispielsweise wenn ein kritischer Zustand erst eintritt, nachdem ein Bewegungsbereich mehrfach durchlaufen worden ist. Insbesondere bei Kreisbewegungen um eine Achse, bei denen mehrere vollständige Umdrehungen erlaubt sind, jedoch eine maximale Anzahl vorgegeben ist, ist eine Überwachung mit einfachen Positionssensoren nicht möglich oder nur mit zusätzliche Einrichtungen zur Auswertung zu bewältigen, die jedoch für sich wiederum fehlersicher seien müssen.

Vor diesem Hintergrund ist es eine Aufgabe der vorliegenden Erfindung, eine Vorrichtung und ein entsprechendes Verfahren anzugeben, welche eine fehlersichere Überwachung eines beweglichen Maschinenteils einer technischen Anlage einfacher, kostengünstiger und flexibler ermöglichen und gleichzeitig die vorstehenden Nachteile vermeiden.

Gemäß einem Aspekt der vorliegenden Erfindung wird diese Aufgabe gelöst durch eine Vorrichtung gemäß Anspruch 1.

Gemäß einem weiteren Aspekt der Erfindung wird diese Aufgabe ferner gelöst durch ein Verfahren gemäß Anspruch 12.

Der neuen Vorrichtung und dem neuen Verfahren liegt somit die Idee zugrunde, die Überwachung eines Bewegungsbereiches eines beweglichen Maschinenteils anhand einer Positionsüberwachung des beweglichen Maschinenteils durchzuführen und mindestens für den Fall, in dem der bewegliche Maschinenteil seinen definierten, zulässigen Wirkbereich verlässt, ein fehlersicheres, vorzugsweise redundantes Abschaltsignal zu erzeugen, mit dem eine technischen Anlage ggf. sicher abgeschaltet werden kann. Vorteilhafterweise kommt die neue Vorrichtung und das neue Verfahren dabei ohne oder mit einer verminderten Anzahl an zusätzlichen Sensoren aus, um vollständig die Grenzen eines Bewegungsbereiches sicherheitsrelevant zu überwachen. Die Überwachung eines Bewegungsbereiches wird auf diese Weise vereinfacht und Kosten für zusätzliche Sensoren, Aktoren und deren Verkabelung gespart.

Weiterhin ermöglicht die neue Vorrichtung und das neue Verfahren die zu überwachenden Bewegungsbereiche flexibel auszuwählen. Die Bereiche müssen daher nicht durch physikalische Grenzen bestimmt seien, sondern können aus der absoluten oder relativen Position des beweglichen Maschinenteils definiert werden. Beispielsweise können ein Bewegungsbereich und seine Grenzen durch eine relative Positionsangabe im Bezug zu einem festen Ruhepunkt definiert sein. Somit kann die neue Vorrichtung schnell und flexibel an spezifische Gegebenheiten angepasst werden, ohne dass eine bauliche Veränderung oder Änderungen an den Sensoranordnungen erfolgen müssen.

Die flexible Wahl des Bewegungsbereiches hat weiterhin den Vorteil, dass ein mehrfaches Durchlaufen des beweglichen Maschinenteils durch einen physikalischen Bewegungsbereich berücksichtigt werden kann, beispielsweise indem ein Bewegungsbereich definiert wird, der über den physikalischen Bewegungsbereich hinausgeht. Am Beispiel einer Kreisbewegung kann der Bewegungsbereich somit durch eine bestimmte Anzahl von Umdrehungen bestimmt sein. In diesem Fall wäre die Drehzahl des entsprechenden Antriebs die relevante Bewegungsgröße, aus der sich die Anzahl der Umdrehungen direkt oder aus einem Übersetzungsverhältnis des Antriebs bestimmen lässt. Das Gebersignal kann hierzu beispielsweise von einem sicheren Drehgeber stammen, so dass das Gebersignal selbst fehlersicher ist. Alternativ ist aber auch ein redundantes Erfassen der Bewegungsgröße am Eingang der erfindungsmäßigen Vorrichtung möglich. Vorteilhafterweise kann die Bewegung unabhängig von der Bewegungs- bzw. Drehrichtung erfasst werden. Die Bewegung kann eine rotatorische oder eine translatorische Bewegung sein.

Das vorstehende Vorgehen kann somit auch bei lateralen Bewegungen eingesetzt werden. Der hierfür nötige physikalische Zusammenhang zwischen Beschleunigung, Geschwindigkeit und zurückgelegter Wegstrecke ist hinlänglich bekannt. So lässt sich die Geschwindigkeit eines bewegten Anlagenteils aus der messtechnisch erfassten Beschleunigung berechnen, indem man die erfassten Beschleunigungswerte über der Zeit integriert. Gleichermaßen kann die zurückgelegte Wegstrecke durch Integration über die Geschwindigkeit bestimmt werden. Um die tatsächlichen Werte der Geschwindigkeit oder Wegstrecke zu erhalten, müssen allerdings die Geschwindigkeit und die Position des bewegten Anlagenteils zu Beginn der Integrationszeit bekannt sein. Dies ist bei einer automatisiert arbeitenden, stationären Anlage jedoch kein Problem, da in aller Regel zumindest nach dem Einschalten der Anlage ein definierter Ruhezustand vorliegt oder in einem Initialisierungsprozess eingenommen wird.

Darüber hinaus stehen vorteilhafterweise diverse Gebersignale, die eine Bewegungsgröße repräsentieren, bei vielen technischen Anlagen mit beweglichen Maschinenteilen bereits zur Verfügung und können von der neuen Vorrichtung wiederverwendet werden. Auf diese Weise können bestehende Sensoren für die Bereitstellung des Gebersignals herangezogen werden, wodurch eine Bereichsüberwachung noch günstiger realisiert werden kann. Der Aspekt der Wiederverwendung kann dabei auch hinsichtlich des Sicherheitskonzepts zum Tragen kommen, indem die neue Vorrichtung vorteilhaft mit anderen Sensoren, beispielsweise Sensoren der Bereichsabsicherung, kombiniert werden kann oder im umgekehrten Fall diese ersetzt.

Darüber hinaus besitzt die neue Vorrichtung den Vorteil, dass sie weitgehend unabhängig vom jeweiligen Anlagentyp und dem verwendeten Sicherheitskonzept ist und damit für eine Vielzahl unterschiedlicher Anlagen eingesetzt werden kann.

Insgesamt bietet die vorliegende Erfindung damit eine kostengünstige und flexible Möglichkeit zur sicherheitsrelevanten Überwachung eines Bewegungsbereichs eines beweglichen Maschinenteils. Die oben genannte Aufgabe wird daher vollständig gelöst.

Gemäß der Erfindung ist die fehlersichere Auswerteeinheit ferner dazu ausgebildet, anhand der Bewegungsgröße eine erste und eine zweite Bewegungsrichtung des beweglichen Maschinenteils sicherheitsrelevant zu bestimmen.

Somit wird neben der Anzahl der Durchläufe eines beweglichen Maschinenteils noch eine Bewegungsrichtung des beweglichen Maschinenteils sicherheitsrelevant bestimmt. Dies hat den Vorteil, dass der definierte Bewegungsbereich ferner in Abhängigkeit der relativen Position des Maschinenteils und der Bewegungsrichtung definiert werden kann. Sicherheitsrelevant bedeutet in diesem Zusammenhang, dass eine fehlerhafte Bestimmung der Bewegungsrichtung beherrscht wird, d.h. die Vorrichtung so ausgebildet ist, dass trotz einer fehlerhaften Erfassung der Bewegungsrichtung das fehlersichere Abschaltsignal bereitstellt wird. Die Bewegungsrichtung kann insbesondere eine Drehrichtung sein.

In einer weiteren Ausgestaltung weist die Vorrichtung ferner einen Zähler auf, in dem die Anzahl der Durchläufe hinterlegbar ist, wobei der Zähler um einen ersten definierten Betrag erhöht wird, wenn das bewegliche Maschinenteil den definierten Bewegungsbereich vollständig in einer ersten Bewegungsrichtung durchlaufen hat und um einen zweiten definierten Betrag vermindert wird, wenn das bewegliche Maschinenteil den definierten Bewegungsbereich vollständig in einer zweiten Bewegungsrichtung durchlaufen hat.

In dieser Ausgestaltung wird der Bewegungsbereich durch eine erste und eine zweite Grenze definiert, wobei bei jedem Durchlauf durch den Bewegungsbereich in einer festgelegten Richtung der Zähler erhöht wird und in entgegengesetzter Richtung der Zähler um einen bestimmten Betrag vermindert wird. Der Zähler gibt somit Aufschluss über die relative Position innerhalb des Bewegungsbereiches. Auf diese Weise kann ein Nullpunkt festgesetzt werden, beispielsweise die Ruheposition des beweglichen Maschinenteils, wobei der Zähler betragsmäßig die Abweichung von diesem Ruhepunkt angibt und das Signum die jeweilige Richtung. Über den Zähler lassen sich besonders einfach Drehbewegungen überwachen, wobei der definierte Bewegungsbereich auch Mehrfachumdrehungen mit einschließen kann und einen Vor- und Rücklauf berücksichtigt.

In einer bevorzugten Ausgestaltung weist die Vorrichtung einen Speicher auf, in dem zumindest ein Wert, der eine Grenze des definierten Bewegungsbereiches repräsentiert, hinterlegbar ist.

In dieser Ausgestaltung können die Grenzen vorteilhafterweise vom Anwender manuell geändert werden. Dadurch lässt sich die Vorrichtung besonders flexibel auf die jeweiligen Gegebenheiten anpassen. Zum Ändern des überwachten Bereiches müssen lediglich die Parameter für die Grenzen des Bewegungsbereiches im Speicher verändert werden. Insbesondere können auf diese Weise auch Bewegungsbereiche definiert und überwacht werden, die nicht physikalisch begrenzt sind. Die Grenzen können durch unterschiedliche Werte repräsentiert werden, beispielsweise durch absolute und/oder relative Positionsangaben oder durch Drehwinkel im Fall einer Kreisbewegung. Vorteilhafterweise werden die Grenzen des Bewegungsbereiches im Bezug auf eine Ruheposition des beweglichen Maschinenteils angegeben, wobei auch ein Wert für die Ruheposition variabel im Speicher hinterlegbar ist.

In einer weiteren Ausgestaltung ist die Auswerteeinheit dazu ausgebildet, ein Ausgangssignal bereitzustellen, welches die erste oder zweite Bewegungsrichtung repräsentiert.

In dieser Ausgestaltung kann ein zusätzliches Ausgangssignal bereitgestellt werden, welches fehlersicher Auskunft über die jeweilige Bewegungsrichtung gibt. Ein derartiges Signal kann vorteilhafterweise von einer übergeordneten Steuerung ausgewertet und in das Gesamtsicherheitskonzept integriert werden. Auf diese Weise können ggf. andere Schutzeinrichtungen ergänzt und/oder ersetzt werden.

In einer weiteren Ausgestaltung ist die Auswerteeinheit dazu ausgebildet, ein Warnsignal bereitzustellen, wenn die Anzahl der Durchläufe des beweglichen Maschinenteils durch den definierten Bewegungsbereich einen definierten Wert überschreitet.

In dieser Ausgestaltung kann durch die neue Vorrichtung zusätzlich ein Warnsignal bereitgestellt werden, wenn eine bestimmte Anzahl von Durchläufen erfolgt ist. Ein derartiges Warnsignal kann beispielsweise von einer Steuerung aufgegriffen werden, um korrigierend einzugreifen, bevor die Vorrichtung das Abschaltsignal bereitstellt, um die Anlage abzuschalten. Auf diese Weise können unnötige Stillstände verhindert werden, die durch vermeidbare Abschaltvorgänge hervorgerufen werden.

Gemäß der Erfindung stellt die Auswerteeinheit das Abschaltsignal beim Überschreiten eines ersten definierten Wertes der Bewegungsgröße bereit.

Neben der Überwachung des Bewegungsbereichs kann zusätziich noch die Bewegungsgröße an sich überwacht werden. Die erfindungsgemäße Vorrichtung kann somit vorteilhaft auch für eine fehlersichere Drehzahlüberwachung eingesetzt werden und ggf. eine zusätzliche Sensorik ganz oder teilweise ersetzen.

In einer weiteren Ausgestaltung ist die Auswerteeinheit dazu ausgebildet, ein Freigabesignal bereitzustellen, wenn die Bewegungsgröße einen zweiten definierten Wert unterschreitet oder einen Stillstand repräsentiert.

In dieser Ausgestaltung kann durch die erfindungsgemäße Vorrichtung ein weiteres Signal bereitgestellt werden, in dessen Abhängigkeit beispielsweise der Zugang zu einer Anlage gesteuert werden kann. Insbesondere bei nachlaufenden Maschinen, die auch nach Abschalten der Versorgungsspannung eine Bewegung ausführen, kann der Zugang zu der Maschine mithilfe des Freigabesignals noch solange begrenzt werden, bis keine Gefahr mehr von der zu überwachenden Maschine ausgeht. Auf diese Weise können weitere Sicherheitsmaßen durch die erfindungsgemäße Vorrichtung übernommen werden.

In einer weiteren Ausgestaltung weist die Vorrichtung einen fehlersicheren Signalgeber zum Bereitstellen des Gebersignals mit einem ersten und einem zweiten Messkanal auf.

Die Verbindung einer fehlersicheren, vorzugsweise redundanten, Auswerteeinheit mit einem fehlersicheren Signalgeber ermöglicht eine vollständige und redundante Überwachung ohne zusätzliche Komponenten. Eine solche Kombination ist daher besonders vorteilhaft und kostengünstig gegenüber Verfahren, bei denen separate Einheiten zum Erfassen der redundanten Eingangsgrößen benötigt werden.

Besonders bevorzugt ist der fehlersichere Signalgeber ein Drehgeber mit einer optischen und einer magnetischen Abtasteinheit auf einer Antriebswelle.

Eine optische und eine magnetische Abtasteinheit ermöglichen besonders vorteilhaft zwei vollwertige Messkanäle auszubilden, die unabhängig voneinander arbeiten. Zusätzlich zur Redundanz kann auf diese Weise auch das Sicherheitskriterium der Diversität durch die beiden Messkanäle implementiert werden. Vorzugsweise besitzen beide Messsysteme eine synchronserielle Schnittstelle (SSI), welche dasselbe Datenformat übergeben kann. Auf diese Weise kann die Auswerteeinheit beide Kanäle einheitlich auswerten. Alternativ können auch Drehgeber verwendet werden, die nur optische bzw. nur magnetische Abtasteinheiten aufweisen.

In einer weiteren Ausgestaltung weist die Vorrichtung ein erstes und ein zweites Schaltelement auf, wobei das Abschaltsignal abhängig von der Schalterstellung des ersten und des zweiten Schaltelements bereitgestellt wird.

Durch zwei Schaltelemente lässt sich besonders gut ein redundantes und damit fehlersicheres Abschaltsignal erzeugen und eine durchgängige Redundanz von den Sensoreingängen bis hin zu den Aktoren gewährleisten. Vorteilhafterweise ist über die Schaltelemente eine Betriebsspannung geführt, deren Ausbleiben an den Ausgängen mittelbar oder unmittelbar zum Abschalten einer zu überwachenden Anlage führt.

In einer weiteren Ausgestaltung ist die fehlersichere Auswerteeinheit zweikanalig redundant ausgelegt.

Mit einer zweikanaligen, redundanten Auswerteeinheit können besonders gut die Anforderungen einer fehlersicheren Auswerteeinheit gewährleistet werden. So kann bei der Verwendung einer zweikanaligen Auswerteeinheit sichergestellt werden, dass auch beim Ausfall eines Kanals eine zu überwachende Anlage noch abgeschaltet werden kann.

In einer weiteren Ausgestaltung weist die Auswerteeinheit eine erste und eine zweite Verarbeitungseinheit auf, die je ein Ausgangssignal erzeugen, welche das Abschaltsignal repräsentieren, wobei die erste und die zweite Verarbeitungseinheit dazu ausgebildet ist, sich gegenseitig zu überwachen.

Durch diese Ausgestaltung kann besonders einfach und sicher eine redundante und damit fehlersicher Auswerteeinheit realisiert werden. Durch die gegenseitige Überwachung kann nicht nur gewährleistet werden, dass bei einem Fehler in einem Kanal die Anlage sicher abgeschaltet wird, sondern dass ein fehlerhafter Kanal auch zuverlässig erkannt werden kann. Vorzugsweise umfasst eine Überwachung auch periodisches Testen der einzelnen Kanäle durch die Auswerteeinheit und/oder einer übergeordneten Steuerung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte, schematische Darstellung eines Ausführungsbeispiels der neuen Erfindung,
- Figur 2: ein Blockschaltbild eines bevorzugten Ausführungsbeispiels der neuen Erfindung,
- Figur 3a: ein Beispiel für einen zu überwachenden Bewegungsbereich eines beweglichen Maschinenteils,
- Figur 3b: ein weiteres Beispiel für einen zu überwachenden Bewegungsbereich eines beweglichen Maschinenteils.

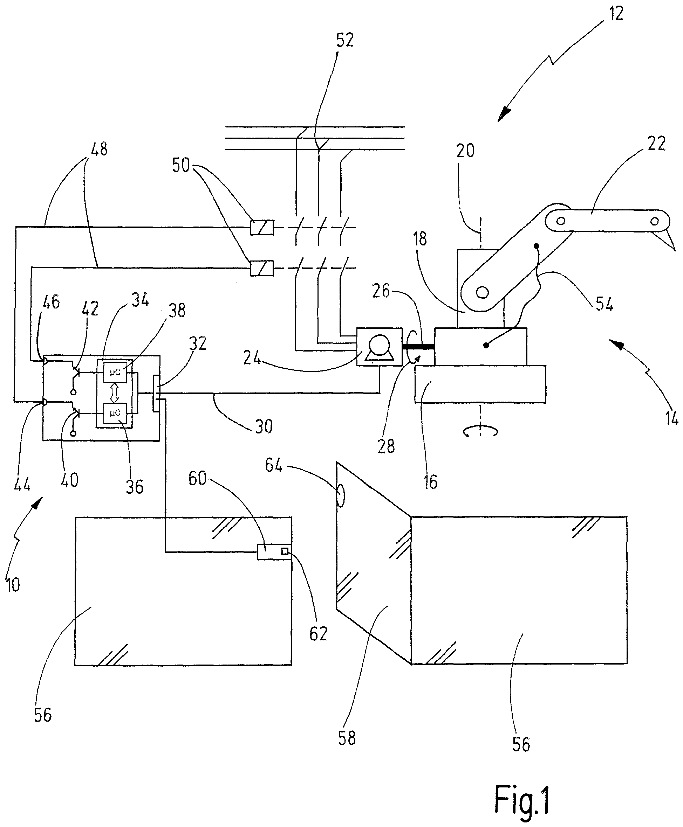

In der Fig. 1 ist ein bevorzugtes Ausführungsbeispiel der neuen Vorrichtung in seiner Gesamtheit mit der Bezugsziffer 10 bezeichnet.

Die Vorrichtung dient hier der Überwachung einer technischen Anlage 12, die durch einen Roboter 14 angedeutet ist. Der Roboter 14 ist hier auf einer feststehenden Basis 16 angeordnet, auf die ein beweglicher Maschinenteil 18 aufgesetzt ist, der sich hier vollständig um seine Längsachse 20 drehen kann. An dem beweglichen Maschinenteil 18 ist ein Roboterarm 22 angeordnet, welcher durch die Drehbewegung des beweglichen Maschinenteils 18 im Raum bewegbar ist. Der zu sichernde Wirkungsbereich der technischen Anlage ergibt sich hier somit aus dem Wirkbereich des Roboterarms 22 zuzüglich der durch eine bewegte Last beanspruchten Fläche.

Zur Absicherung der technischen Anlage 12 sind in dem hier dargestellten Fall zwei Absicherungsmaßnahmen getroffen worden. Einerseits wird überwacht, dass kein unberechtigter Zugang in den zu sichernden Wirkungsbereich erfolgt und andererseits wird sichergestellt, dass die technische Anlage 12 selbst innerhalb ihrer vorgegebenen Parameter agiert und diese nicht verlässt. Für den letzteren Fall muss hier insbesondere überwacht werden, ob der Roboterarm 22 und damit verbunden der bewegliche Maschinenteil 18 innerhalb des zugeordneten Bewegungsbereiches bleibt. Wie im Folgenden noch näher erläutert ist, werden in diesem bevorzugten Ausführungsbeispiel der neuen Erfindung beide Absicherungsmaßnahmen durch die erfindungsgemäße Vorrichtung 10 wahrgenommen.

Der Roboter 14 wird hier durch einen elektrischen Antrieb 24 angetrieben, der über eine Welle 26 mit dem beweglichen Maschinenteil 18 gekoppelt ist. Die Kopplung der Welle 26 mit dem beweglichen Maschinenteil erfolgt beispielsweise über ein hier nicht dargestelltes Getriebe mit einer festen Übersetzung, so dass die Bewegung des beweglichen Maschinenteils 18 proportional zu einer Drehzahl 28 des elektrischen Antriebs 24 ist. Die Drehzahl 28 des Antriebs wird hier von einem Signalgeber erfasst und als Gebesignal über die Leitung 30 an die Vorrichtung 10 übertragen. Verschiedene Arten die Drehzahl 28 zu erfassen sind möglich, vorzugsweise wird jedoch ein hier nicht näher dargestellter sicherer Drehgeber verwendet, dessen Sensoren mit der Welle 26 gekoppelt sind und der dazu ausgebildet ist, die Drehzahl der Welle 26 sicherheitsrelevant zu bestimmen und ein entsprechendes Gerbersignal zu erzeugen. Die Drehzahl 28 repräsentiert dabei nur eine Möglichkeit für eine Bewegungsgröße. Alternativ oder ergänzend können auch die Beschleunigung der Welle oder aber eine absolute Wegstrecke von entsprechenden Sensoren erfasst werden. Die Vorrichtung ist somit nicht auf eine bestimmte Bewegungsgröße beschränkt, sondern kann vielmehr bevorzugt verschiedene Bewegungsgrößen zur Auswertung heranziehen, beispielsweise um die Plausibilität eines Auswerteergebnisses anhand verschiedener Einzelmessungen zu überprüfen.

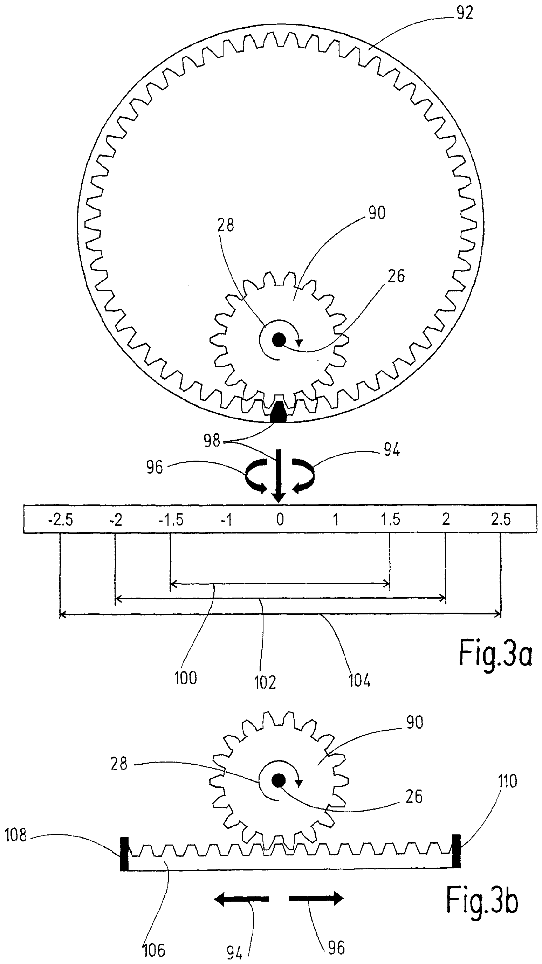

Die Leitung 30 ist ferner mit einem Eingang 32 der Vorrichtung 10 verbunden, worüber das Gebersignal an die fehlersichere Auswerteeinheit 34 weitergeleitet wird. Die fehlersicher Auslegung der Auswerteeinheit 34 ist hier durch zwei voneinander getrennten Verarbeitungseinheiten 36, 38 angedeutet, die sich vorzugsweise gegenseitig überwachen können. Die Vorrichtung 10 ist somit zweikanalig redundant ausgelegt. Die fehlersichere Auswerteeinheit 34 bestimmt, wie im Folgenden noch näher erläutert ist, anhand der mit dem Gebersignal übermittelten Bewegungsgröße oder -größen die jeweiligen Durchläufe durch einen definierten Bewegungsbereich des Roboters 14. Der Bewegungsbereich ist hier durch eine vollständige Umdrehung des beweglichen Maschinenteils 18 definiert, wobei der Roboter 14 diesen Bewegungsbereich mehrfach durchlaufen kann, d.h. der Roboter sich mehrfach um die eigene Achse 20 drehen kann. Wie im Bezug auf die Figuren 3a und 3b noch näher erläutert ist, ist der definierte Bewegungsbereich nicht auf Kreisbewegungen beschränkt, sondern kann auch laterale Bewegungen umfassen.

In dem hier dargestellten bevorzugten Ausführungsbeispiel der Erfindung bestimmt die fehlersichere Auswerteeinheit 34 anhand der Drehzahl 28 des elektrischen Antriebs 24 die tatsächlich erfolgte Anzahl an Drehungen des beweglichen Maschinenteils 18 um die eigene Achse 20. In anderen Ausführungsbeispielen wird die Bewegung des beweglichen Maschinenteils 18 alternativ oder ergänzend durch andere Bewegungsgrößen bestimmt. Dabei muss die Bewegungsgröße nicht unmittelbar am Antrieb 24 aufgenommen werden, sondern kann beispielsweise auch durch Beschleunigungssensoren am beweglichen Maschinenteil 18 selbst bestimmt werden. Besonders bevorzugt werden verschiedene Bewegungsgrößen erfasst und ausgewertet, um eine diversitäre Überwachung zu ermöglichen. Die Bewegung kann bevorzugt auch relativ zu einem festgelegten Fixpunkt erfasst werden, beispielsweise einer Ruheposition des Roboters 14. Auf diese Weise kann die Auswertung auf Relativwerten beruhen, wodurch sich Größen verschiedener Sensoren leichter vergleichen und/oder kombinieren lassen.

In Abhängigkeit der Auswertung stellt die fehlersichere Auswerteeinheit 34 ein fehlersicheres Abschaltsignal bereit, wenn eine Anzahl an Durchläufen durch den definierten Bewegungsbereich einen definierten Schwellwert überschreitet. Der Schwellwert kann dabei auch den Wert 1 annehmen, so dass bereits nach einmaligem Durchlaufen des definierten Bewegungsbereiches das fehlersichere Abschaltsignal erzeugt wird. Fehlersicher bedeutet auch in diesem Zusammenhang, dass mit dem Abschaltsignal immer gewährleistet werden kann, dass eine zu überwachende Anlage abschaltet, selbst wenn Teile der Sicherungsfunktion funktionsunfähig werden. Vorzugsweise wird somit auch in diesem Fall ein redundantes Abschaltsignal verwendet, wie es hier durch die beiden Schaltelemente 40, 42 angedeutet ist. Über die Schaltelemente 40, 42 wird eine hier nicht näher dargestellte Versorgungsspannung an die Ausgänge 44, 46 geführt, womit in diesem Ausführungsbeispiel über die Leitungen 48 die Schütze 50 betrieben werden. Die Kontakte der Schütze 50 liegen wiederum in an sich bekannter Weise in Serie in einer Stromzufuhr 52 des elektrischen Antriebs 24. Nur wenn die Schütze bestromt und somit angezogen sind, wird der elektrische Antrieb 24 versorgt und betriebsbereit. Daraus folgt, dass zumindest einer der Schütze 50 abfällt, wenn eines der der Schaltelemente 40, 42 geöffnet wird, wodurch der Betrieb des Roboters 14 aufgrund der unterbrochenen Stromzufuhr 52 sicher eingestellt wird.

Dies kann in dem gezeigten Beispiel dann der Fall sein, wenn der bewegliche Maschinenteil 18 eine festgelegte Anzahl von Umdrehungen um die eigene Achse 20 durchgeführt hat und somit der definierte Schwellwert überschritten wurde. Ein Schwellwert könnte dabei durch eine physikalische Einschränkung der Bewegungsmöglichkeit des beweglichen Maschinenteils gegeben sein, die sich nicht unmittelbar aus der Art des Antriebs ergibt. Hierzu ist hier beispielsweise eine Druckluftleitung 54 zwischen der Basis 16 und dem Roboterarm 22 angedeutete, die sich nur eine bestimmte Anzahl von Umdrehungen um den Roboter wickeln kann. Die erfindungsgemäße Vorrichtung ermöglicht, dass der Roboters 14 sicher ausgeschaltet wird, sobald die definierte Anzahl an Umdrehungen erfolgt ist. An dieser Stelle sei angemerkt, dass die Überwachung nicht auf das gezeigte Ausführungsbeispiel beschränkt ist, sondern für jegliche Überwachung einer Anzahl von Durchläufen durch einen Bewegungsbereich, bei denen eine Bewegungsgröße zur Bestimmung der absoluten oder relativen Lage herangezogen werden kann, Anwendung findet.

Das in der 1 gezeigte Ausführungsbeispiel kann neben der Überwachung der Anzahl der Durchläufe durch einen definierten Bewegungsbereich auch weitere Absicherungsmaßnahmen ganz oder teilweise wahrnehmen. So ist hier beispielsweise zur Absicherung des unberechtigten Zugangs zum Wirkungsbereich des Roboters 14 ein Schutzzaun 56 mit einer überwachten Tür 58 vorgesehen. Die Tür 58 weist einen Sicherheitsschalter 60 mit einem Sensor 62 und einem Betätiger 64 auf, wobei der Sicherheitsschalter 60 ein Freigabesignal 66 nur dann erzeugt, wenn die Tür 58 ordnungsgemäß geschlossen ist. Das Freigabesignal 66 des Sicherheitsschalters 60 wird am Eingang 34 der erfindungsgemäßen Vorrichtung 10 aufgenommen und vorzugsweise als binäres Signal von der Auswerteeinheit 34 verarbeitet, die in Abhängigkeit des Freigabesignals 66 die Ausgänge 44, 46 in zuvor beschriebener Art und Weise ansteuert. In einem besonders bevorzugten Ausführungsbeispiel kann die Vorrichtung 10 im umgekehrten Fall den Schutztürschalter 44 anweisen, die Schutztür zu verriegeln bis ein entsprechender sicherer Zustand der technischen Anlage 12 erreicht ist. Dieser kann beispielsweise erreicht sein, wenn der Antrieb stillsteht oder die Drehzahl unter einen definierten Wert gesunken ist. Zusätzlich oder alternativ kann der Sicherheitsschalter 60 auch über eine Zuhaltung verfügen, so dass die Tür nur geöffnet werden kann, wenn ein entsprechendes Freigabesignal von der Vorrichtung 10 vorliegt.

Die erfindungsgemäße Vorrichtung kann somit grundsätzlich auch für die Überwachung der Bewegungsgröße selbst verwendet werden. Beispielsweise kann durch die neue Vorrichtung ein sicheres Abschalten der Anlage auch dann erfolgen, wenn der Antrieb 24 eine definierte maximale Drehzahl überschritten hat. Insgesamt lässt sich die neue Vorrichtung somit einfach und flexibel in bestehende Sicherheitskonzepte integrieren bzw. können vorzugsweise durch die neue Vorrichtung bisherige Schutzeinrichtungen ergänzt oder ersetzt werden.

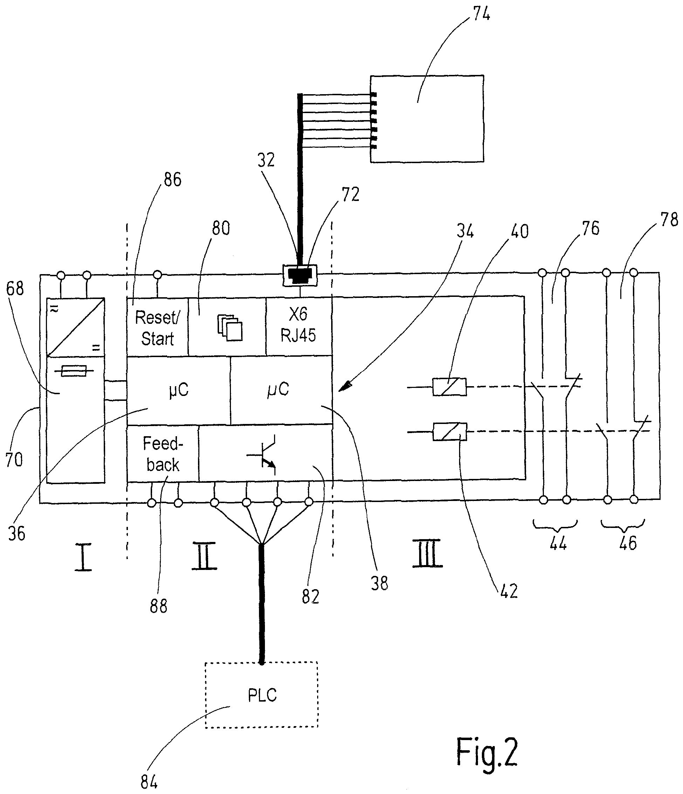

Mit Bezug auf Fig. 2 ist im Folgenden ein besonders bevorzugtes Ausführungsbeispiel der neuen Vorrichtung 10 gezeigt. Gleiche Bezugszeichen bezeichnen dabei gleiche Teile wie in den Fig. 1.

Die Vorrichtung 10 teilt sich hier strukturell in drei Bereiche I, II, III auf. Im ersten Bereich I ist eine Spannungsversorgung 68 für die internen Bauelemente der neuen Vorrichtung 10 angeordnet. Im zweiten Bereich II sind die Logikeinheiten und die Eingänge zusammengefasst. Der dritte Bereich III umfasst die sicherheitsgerichteten Ausgänge 44, 46 mit den zughörigen Schaltelementen 40, 42. Allgemein sind die Schnittstellen nach außen hier durch Kreise am Gehäuse 70 der neuen Vorrichtung angedeutet, wobei es sich hier bevorzugt um Federkraftklemmen handelt. Der Eingang 32 ist hier als RJ45-Schnittstelle ausgebildet und zur Aufnahme eines mehradrigen Patchkabels geeignet.

Ein Gebersignal wird in diesem Ausführungsbeispiel von einem sicheren Signalgeber bereitgestellt. Dieser ist hier durch ein dediziertes Messsystem 74 angedeutet, welches an einem Antrieb eines hier nicht dargestellten beweglichen Maschinenteils angeordnet ist und fehlersicher eine Bewegungsgröße des beweglichen Maschinenteils bestimmt. Bei dem Messsystem 74 handelt es sich vorzugsweise um ein redundantes, zweikanaliges System, beispielsweise mit einer optischen und magnetischen Abtasteinheit, die auf einer Antriebswelle angeordnet sind und je ein Signal repräsentativ für die Bewegung des beweglichen Maschinenteils bereitstellen. Darüber hinaus können alternativ oder ergänzend auch andere Bewegungsgrößen, beispielsweise durch Beschleunigungssensoren am beweglichen Maschinenteil, durch das Messsystem 74 erfasst werden. Die gemessenen Signale, welche zusammen das Gebersignal repräsentieren, werden in diesem Ausführungsbeispiel unabhängig voneinander über je eine Ader eines 6-adrigen Patchkabels an den Eingang 32 übertragen.

Die Auswertung des Gebersignals erfolgt durch die fehlersichere Auswerteeinheit 34, die auch in diesem Ausführungsbeispiel zweikanalig redundant ausgelegt ist. Dazu weist die Auswerteeinheit 34 eine erste und eine zweite Verarbeitungseinheit 36, 38 auf, beispielsweise in Form eines FPGA, ASIC oder anderweitige Mikrocontrollers. In besonders bevorzugten Ausführungsbeispielen ist die fehlersichere Auswerteeinheit 34 darüber hinaus nicht nur redundant, sondern auch diversitär ausgelegt, beispielsweise durch die Verwendung funktionsgleicher, jedoch strukturell unterschiedlicher Mikrocontroller von unterschiedlichen Herstellern, wie es hier durch die kursive Beschriftung der zweiten Verarbeitungseinheit 38 angedeutet ist. Diese Auslegung ermöglicht es, dass systembedingte Fertigungsfehler ausgeschlossen werden können.

Von der fehlersichern Auswerteeinheit 34 werden hier in Anhängigkeit des Gebersignals zwei Schaltelemente 40, 41 angesteuert, die je einen Signalpfad 76, 78 des sicheren Ausgangs 44, 46 schalten. Vorzugsweise sind die Kontakte der Schaltelemente, über die die Signalpfade geführt sind, je ein Öffner- und ein Schließerkontakt, die zueinander zwangsgeführt sind. Über die Signalpfade 76, 78 können, wie im Bezug auf die Fig. 1 bereits erläutert, eine Versorgungsspannung für externe Schütze geführt werden, wobei die Schütze abfallen, sobald der zugehörige Signalpfad 76, 78 geöffnet wird.

Wie bereits zuvor im Bezug auf die Fig. 1 beschrieben wurde, kann die fehlersicher Auswerteeinheit 34 die Anzahl der Durchläufe des beweglichen Maschinenteils 18 durch einen definierten Bewegungsbereich anhand der mit dem Gebersignal übermittelten Bewegungsgröße bestimmen und über die Ausgänge 44, 46 ein redundantes Abschaltsignal bereitstellen. Darüber hinaus ist in dieser bevorzugten Ausgestaltung die fehlersichre Auswerteeinheit 34 ferner dazu ausgebildet, die Ausgänge 44, 46 zu schalten, wenn die Bewegungsgröße selbst einen festgelegten Schwellwert überschreitet. So kann mit dem hier gezeigten Ausführungsbeispiel sowohl die Durchläufe eines beweglichen Maschinenteils durch einen definierten Bewegungsbereich bestimmt werden und gleichzeitig eine Grenz- oder Höchstdrehzahl des Antriebs überwacht werden.

Die Vorrichtung ist darüber hinaus vorzugsweise frei parametrisierbar, indem beispielsweise Werte für den definierten Bewegungsbereichs oder die Schwellwerte in einem Speicher 80 hinterlegt sind. Auf diese Weise kann die Vorrichtung flexibel auf die jeweilige Aufgabe angepasst werden. Besonders bevorzugt handelt es sich bei dem Speicher 80 um einen entfernbaren Speicher, bspw. eine Chip- oder Speicherkarte, so dass eine Konfiguration auf einfache Weise auf einem separaten Gerät erstellt, geändert und auf die Vorrichtung übertragen werden kann.

Vorteilhafterweise kann die erfindungsgemäße Vorrichtung 10 neben der Abschaltfunktion noch weitere sicherheitsgerichtete Aufgaben wahrnehmen. Hierzu weist die Vorrichtung 10 weitere Ausgänge 82 auf, über die das Abschaltsignal oder anderweitige Warnsignale bereitgestellt werden können. Vorzugsweise handelt es ich hierbei im Gegensatz zu den Ausgängen 44, 46 um kleinbauende Halbleiterausgänge. Über die Halbleiterausgänge können zusätzliche Warnsignale bereitgestellt werden, beispielsweise wenn zusätzliche Bewegungsbereiche definiert sind, kann ein Überschreiten dieser Bereiche ein entsprechendes Warnsignal auslösen. Die Parametrisierung der zusätzlichen Bewegungsbereiche sowie die Schwellwerte für die Warnsignale können dabei ebenfalls im Speicher 80 hinterlegt sein. Eine übergeordnete Steuerung 84 kann beispielsweise eine programmierbare Steuerung (PLC) seien, die anhand der Warnsignale die Anlage ansteuert, um einem endgültigen Abschalten der Anlage durch die Vorrichtung zuvorzukommen.

Neben den zusätzlichen Ausgängen sind in dem bevorzugtem Ausführungsbeispiel nach Fig. 2 auch zusätzliche Eingänge vorgesehen, beispielsweise für eine Reset-/Starteinheit 86 und/oder eine Rückleseeinheit 88. An die Reset-/Starteinheit 86 ist ein hier nicht dargestellter Taster anschließbar, mit dem ein sicheres Starten der Anlage durch eine manuelle Freigabe ermöglicht werden kann. Durch die manuelle Freigabe kann sichergestellt werden, dass ein erneutes Anlaufen der Maschine durch eine Person bestätigt werden muss. Über die Reset-/Starteinheit kann die Vorrichtung 10 somit zurückgesetzt werden, sollte es zu einem Abschalten gekommen sein.

Über die Rückleseeinheit 88 kann vorzugsweise die Schalterstellung der sicheren Ausgänge 44, 46 und/oder der Schütze zurückgelesen werden, worüber die Vorrichtung 10 die eigene Funktionsfähigkeit überprüfen kann. Im bevorzugten Ausführungsbeispielen testet die Vorrichtung über die Rückleseeinheit 88 die eigene Funktionsfähigkeit kontinuierlich.

Die Vorrichtung ist bevorzugt in einem Gehäuse 70 angeordnet und vorzugsweise für die Montage auf einer Normschiene geeignet. Das Gehäuse kann in einem Schaltschrank montiert werden oder selbst für eine Schutzart von mindestens IP54, vorzugsweise IP67, ausgelegt sein.

Mit Bezug auf die Fig. 3a und 3b werden im Folgenden exemplarisch zwei zu überwachende Bewegungsbereiche erläutert, die bevorzugt mit der neuen Vorrichtung 10 überwacht werden können.

Fig. 3a zeigt ein bevorzugtes Ausführungsbeispiel zur Überwachung einer Kreisbewegung. Ein nicht näher dargestellter beweglicher Maschinenteil wird hier über ein Getriebe mit einem Stirnrad 90 und einem innenverzahnten Zahnrad 92 angetrieben. Das Stirnrad 90 ist mit einer Antriebswelle 26 verbunden, die selbst mit einem hier nicht dargestellten Antrieb gekoppelt ist. Die Antriebswelle 26 überträgt eine Drehzahl 28 des Antriebs auf das Stirnrad 90, welches wiederum das innenverzahnte Zahnrad 92 antreibt und damit verbunden den beweglichen Maschinenteil. Der bewegliche Maschinenteil wird somit proportional zur Drehzahl 28 in einem vom Getriebe vorgegebenen Verhältnis gedreht.

Der Bewegungsbereich kann hier durch einen vollständigen Umlauf des innenverzahnten Zahnrads 92 definiert sein. Ein Durchlauf durch den definierten Bewegungsbereich würde somit einer vollständigen Umdrehung des innenverzahnten Zahnrads 92 entsprechen. Über das Übersetzungsverhältnis des Getriebes kann wiederum die benötigte Anzahl der Umdrehung der Antriebswelle 26 bestimmt werden, die sich wiederum aus der Drehzahl, der Drehgeschwindigkeit und/oder der Drehbeschleunigung in an sich bekannter Weise ermitteln lässt. Drehbeschleunigung, Drehgeschwindigkeit und/oder die Drehzahl können somit allesamt Bewegungsgrößen im Sinne der vorliegenden Erfindung seien.

Die Anzahl der Durchläufe durch den definierten Bewegungsbereich ist darüber hinaus abhängig von einer Bewegungsrichtung des Antriebs. Im gezeigten Ausführungsbeispiel ist die Bewegungsrichtung durch die Drehrichtung des Antriebs bestimmt, durch die sich der bewegliche Maschinenteil in einer ersten Bewegungsrichtung 94 und einer zweiten, hier gegenläufigen Bewegungsrichtung 96 durch den definierten Bewegungsbereich bewegen lässt. Neben der Bewegung muss durch die neue Vorrichtung somit auch fehlersicher die Bewegungsrichtung 94, 96 aus der Bewegungsgröße bestimmt werden. Vorzugsweise kann die fehlersicher bestimmte Bewegungsrichtung als weiteres Signal über einen separaten Ausgang der Vorrichtung für weitere Anwendungen bereitgestellt werden.

Da sich der definierte Bewegungsbereich maßgeblich durch die Bewegungsgröße bestimmen lässt, können auf einfache Weise Bewegungsbereiche definiert werden, die nicht unmittelbar in mechanische Grenzen gefasst werden können, beispielsweise Teildrehungen. Somit lassen sich mit der erfindungsgemäßen Vorrichtung auch diese Teilbereiche fehlersicher überwachen und ein sicheres Abschalten gewährleisten, wenn ein Teilbereich überschritten wird. Zusätzliche sicherheitsgerichtete Sensoren oder Aktoren werden hierzu nicht benötigt.

Mit Bezug auf die Fig. 3a sind in einem Diagramm verschiedene Bereiche dargestellt, wobei die ganzzahligen Angaben jeweils die entsprechende Anzahl an Durchläufen durch den definierten Bewegungsbereich repräsentieren. Die Anzahl der Durchläufe ist hier auf einen Fixpunkt 98 bezogen, welcher beispielsweise eine Ruheposition des beweglichen Maschinenteils repräsentiert. Ausgehend von diesem Fixpunkt 98 sind hier ein erster und ein zweiter Bereich 100, 102 definierte, wobei jeweils eine Warnung ausgelöst wird, wenn die die Anzahl der Durchläufe über einen dieser Bereiche hinausgeht. Die Warnungen können vorzugsweise als separates Signal über zusätzliche Ausgänge einer übergeordneten Steuerung bereitgestellt werden. Ein dritter Bereich 104 markiert den Abschaltbereich. Verlässt der bewegliche Maschinenteil diesen Bereich wird von der Vorrichtung ein fehlersicheres Abschaltsignal bereitgestellt, welches beispielsweise den Antrieb des beweglichen Maschinenteils zuverlässig und sicher stilllegt. Vorzugsweise sind die Bereiche frei parametrisierbar, so dass die Vorrichtung einfach auf geänderte Bedingungen angepasst werden kann.

Die vorliegende Erfindung ist nicht auf die Überwachung von Kreisbewegungen, wie in der Fig. 3a gezeigt, beschränkt. Mit Bezug auf die Fig. 3b ist beispielhaft die Überwachung einer translatorischen Bewegung angedeutet. Ein über eine Antriebswelle 26 angetriebenes Stirnrad 90 greift hier in eine Zahnstange 106, die mit einem hier nicht dargestellten beweglichen Maschinenteile gekoppelt ist. Die Rotation des Stirnrads 90 wird somit in eine Translation gewandelt. Wie zuvor anhand der Kreisbewegung beschrieben können ein oder mehrere definierte Bewegungsbereiche innerhalb der physikalischen Grenzen 108, 110 der Zahnstange 106 definiert seien und durch die erfindungsgemäße Vorrichtung fehlersicher überwacht werden.

## Patentansprüche

1. Vorrichtung (10) zum fehlersicheren Überwachen einer Anzahl an Durchläufen eines beweglichen Maschinenteils (18) durch einen definierten Bewegungsbereich
mit einer fehlersicheren Auswerteeinheit (34) zum Bereitstellen eines fehlersicheren Abschaltsignals, und
mit einem Eingang (32) zum Aufnehmen eines Gebersignals, welches eine Bewegungsgröße des beweglichen Maschinenteils (18) repräsentiert,
**dadurch gekennzeichnet, dass** die fehlersichere Auswerteeinheit (34) dazu ausgebildet ist, eine Anzahl der Durchläufe des beweglichen Maschinenteils (18) durch den definierten Bewegungsbereich aus der Bewegungsgröße zu bestimmen und das fehlersichere Abschaltsignal bereitzustellen, wenn die bestimmte Anzahl der Durchläufen des beweglichen Maschinenteils (18) durch den definierten Bewegungsbereich einen ersten definierten Schwellwert überschreitet, wobei die Anzahl an Durchläufen durch den definierten Bewegungsbereich abhängig von einer Bewegungsrichtung des beweglichen Maschinenteils (18) ist und die fehlersichere Auswerteeinheit (34) ferner dazu ausgebildet ist, anhand der Bewegungsgröße eine erste und eine zweite Bewegungsrichtung (94, 96) des beweglichen Maschinenteils (18) sicherheitsrelevant zu bestimmen.

2. Vorrichtung nach Anspruch 1, ferner aufweisend: einen Zähler, in dem die Anzahl der Durchläufe hinterlegbar ist, wobei der Zähler um einen ersten definierten Betrag erhöht wird, wenn das bewegliche Maschinenteil (18) den definierten Bewegungsbereich vollständig in einer ersten Bewegungsrichtung (94) durchlaufen hat und um einen zweiten definierten Betrag vermindert wird, wenn das bewegliche Maschinenteil den definierten Bewegungsbereich vollständig in einer zweiten Bewegungsrichtung (96) durchlaufen hat.

3. Vorrichtung nach Anspruch 1 oder 2, ferner aufweisend: einen Speicher (80), in dem ein Wert, der eine Grenze des definierten Bewegungsbereiches repräsentiert, hinterlegbar ist.

4. Vorrichtung nach einem der Ansprüche 1 bis 3, wobei die fehlersichere Auswerteeinheit (34) dazu ausgebildet ist, ein Ausgangssignal bereitzustellen, welches die erste oder zweite Bewegungsrichtung (94, 96) repräsentiert.

5. Vorrichtung nach einem der Ansprüche 1 bis 4, wobei die fehlersichere Auswerteeinheit dazu ausgebildet ist, ein Warnsignal bereitzustellen, wenn die Anzahl der Durchläufe des beweglichen Maschinenteils (18) durch den definierten Bewegungsbereich einen definierten Wert überschreitet.

6. Vorrichtung nach einem der Ansprüche 1 bis 5, wobei die fehlersichere Auswerteeinheit (34) dazu ausgebildet ist, ein Freigabesignal bereitzustellen, wenn die Bewegungsgröße einen zweiten definierten Schwellwert unterschreitet oder einen Stillstand repräsentiert.

7. Vorrichtung nach einem der Ansprüche 1 bis 6, ferner aufweisend: einen fehlersicheren Signalgeber (74) zum Bereitstellen des Gebersignals mit einem ersten und einem zweiten Messkanal.

8. Vorrichtung nach Anspruch 7, wobei der fehlersichere Signalgeber (74) ein Drehgeber mit einer optischen und/oder einer magnetischen Abtasteinheit auf einer Antriebswelle ist.

9. Vorrichtung nach einem der Ansprüche 1 bis 8, ferner aufweisend: ein erstes Schaltelement (40) und ein zweites Schaltelement (42), wobei das Abschaltsignal abhängig von der Schalterstellung des ersten und zweiten Schaltelements (40, 42) bereitgestellt wird.

10. Vorrichtung nach einem der Ansprüche 1 bis 9, wobei die fehlersichere Auswerteeinheit (34) eine zweikanalig redundante Auswerteeinheit ist.

11. Vorrichtung nach einem der Ansprüche 1 bis 10, wobei die fehlersichere Auswerteeinheit (34) eine erste und eine zweite Verarbeitungseinheit (36, 38) aufweist, die je ein Ausgangsignal erzeugen, welche das Abschaltsignal repräsentieren, wobei die erste und zweite Verarbeitungseinheit (36, 38) dazu ausgebildet sind, sich gegenseitig zu überwachen.

12. Verfahren zum fehlersicheren Überwachen einer Anzahl an Durchläufen eines beweglichen Maschinenteils (18) durch einen definierten Bewegungsbereich, mit den Schritten:
- Aufnehmen eines Gebersignals, welches eine Bewegungsgröße des beweglichen Maschinenteils (18) repräsentiert, an einem Eingang (32); und
- Bereitstellen eines fehlersicheren Abschaltsignals durch eine fehlersichere Auswerteeinheit (34);
**dadurch gekennzeichnet, dass**
die fehlersichere Auswerteeinheit (34) eine Anzahl der Durchläufe des beweglichen Maschinenteils (18) durch den definierten Bewegungsbereich aus der Bewegungsgröße bestimmt und das fehlersichere Abschaltsignal bereitstellt, wenn die bestimmte Anzahl der Durchläufen des beweglichen Maschinenteils (18) durch den definierten Bewegungsbereich einen ersten definierten Schwellwert überschreitet, wobei die Anzahl an Durchläufen durch den definierten Bewegungsbereich abhängig von einer Bewegungsrichtung des beweglichen Maschinenteils (18) ist, und wobei die fehlersichere Auswerteeinheit (34) anhand der Bewegungsgröße eine erste und eine zweite Bewegungsrichtung (94, 96) des beweglichen Maschinenteils (18) sicherheitsrelevant bestimmt.

13. Computerprogramm mit Programmcode, der zur Durchführung des Verfahrens nach Anspruch 12 ausgebildet ist, wenn der Programmcode auf einem Prozessor einer Vorrichtung gemäß einem der Ansprüche 1 bis 11 ausgeführt wird.

## Claims

1. Device (10) for fail-safe monitoring of a number of passes of a moving machine part (18) through a defined movement region.
with a fail-safe evaluation unit (34) for providing a fail-safe shutdown signal, and
having an input (32) for receiving an encoder signal representing a motion value of the moving machine part (18),
**characterized in that** the fail-safe evaluation unit (34) is configured to determine a number of passes of the moving machine part (18) through the defined movement region from the motion value and to provide the fail-safe shutdown signal if the determined number of passes of the moving machine part (18) through the defined movement region exceeds a first defined threshold value, wherein the number of passes through the defined movement region is based on a moving direction of the moving machine part (18), and the fail-safe evaluation unit (34) is further configured to determine a first and a second moving direction (94, 96) of the moving machine part (18) in a safety-relevant manner on the basis of the motion value.

2. Device according to claim 1, further comprising: a counter in which the number of passes can be stored, the counter being increased by a first defined amount when the moving machine part (18) has completely passed through the defined movement region in a first moving direction (94) and being decreased by a second defined amount when the moving machine part has completely passed through the defined movement region in a second moving direction (96).

3. Device according to claim 1 or 2, further comprising: a memory (80) in which a value representing a limit of the defined movement region can be stored.

4. Device according to any one of claims 1 to 3, wherein the fail-safe evaluation unit (34) is configured to provide an output signal representing the first or second direction of movement (94, 96).

5. Device according to any one of claims 1 to 4, wherein the fail-safe evaluation unit is configured to provide a warning signal if the number of passes of the moving machine part (18) through the defined movement region exceeds a defined value.

6. Device according to any one of claims 1 to 5, wherein the fail-safe evaluation unit (34) is configured to provide a release signal if the movement variable falls below a second defined threshold value or represents a standstill.

7. Device according to any one of claims 1 to 6, further comprising: a fail-safe signal encoder (74) for providing the encoder signal having a first and a second measurement channel.

8. Device according to claim 7, wherein the fail-safe signal encoder (74) is a rotary encoder having an optical and/or a magnetic sensing unit attached to a driving shaft.

9. Device according to any one of claims 1 to 8, further comprising: a first switching element (40) and a second switching element (40, 42), wherein the shutdown signal is provided depending on the switch position of the first and second switching elements (40, 42).

10. Device according to any one of claims 1 to 9, wherein the fail-safe evaluation unit (34) is a two-channel redundant evaluation unit.

11. Device according to any one of claims 1 to 10, wherein the fail-safe evaluation unit (34) comprises first and second processing units (36, 38) each generating an output signal representing the shutdown signal, the first and second processing units (36, 38) being adapted to monitor each other.

12. Method for fail-safe monitoring of a number of passes of a moving machine part (18) through a defined movement region, comprising the steps:
- receiving, at an input (32), an encoder signal representing a motion value of the moving machine part (18); and
- providing, by a fail-safe evaluation unit (34), a fail-safe shutdown signal;
**characterized in that**
the fail-safe evaluation unit (34) determines a number of passes of the moving machine part (18) through the defined movement region from the motion value and provides the fail-safe shutdown signal if the determined number of passes of the moving machine part (18) through the defined movement region exceeds a first defined threshold value, wherein the number of passes through the defined movement region is dependent on a moving direction of the moving machine part (18), and wherein the fail-safe evaluation unit (34) determines a first and a second moving direction (94, 96) of the moving machine part (18) in a safety-relevant manner on the basis of the motion value.

13. Computer program comprising program code adapted to perform the method of claim 12 when the program code is executed on a processor of an apparatus according to any one of claims 1 to 11.

## Revendications

1. Dispositif (10) de surveillance protégée contre les erreurs d'un nombre de passages d'une partie de machine mobile (18) par une plage de mouvement définie, comprenant
une unité d'évaluation protégée contre les erreurs (34) destinée à fournir un signal de coupure protégé contre les erreurs, et
une entrée (32) destinée à enregistrer un signal de codeur qui représente une grandeur de mouvement de la partie de machine mobile (18),
**caractérisé en ce que** l'unité d'évaluation protégée contre les erreurs (34) est réalisée pour déterminer à partir de la grandeur de mouvement un nombre des passages de la partie de machine mobile (18) par la plage de mouvement définie, et pour fournir le signal de coupure protégé contre les erreurs si le nombre déterminé des passages de la partie de machine mobile (18) par la plage de mouvement définie dépasse une première valeur seuil définie, le nombre de passages par la plage de mouvement définie étant dépendant d'une direction de mouvement de la partie de machine mobile (18), et l'unité d'évaluation protégée contre les erreurs (34) étant en outre réalisée pour déterminer sur le plan de la sécurité une première et une deuxième direction de mouvement (94, 96) de la partie de machine mobile (18) à l'aide de la grandeur de mouvement.

2. Dispositif selon la revendication 1, comprenant un compteur dans lequel le nombre des passages peut être stocké, le compteur étant incrémenté d'une première quantité définie si la partie de machine mobile (18) est passée entièrement par la plage de mouvement définie dans une première direction de mouvement (94), et est décrémenté d'une deuxième quantité définie si la partie de machine mobile est passée entièrement par la plage de mouvement définie dans une deuxième direction de mouvement (96).

3. Dispositif selon la revendication 1 ou 2, comprenant une mémoire (80) dans laquelle une valeur qui représente une limite de la plage de mouvement définie peut être stockée.

4. Dispositif selon l'une quelconque des revendications 1 à 3, dans lequel l'unité d'évaluation protégée contre les erreurs (34) est réalisée pour fournir un signal de sortie qui représente la première ou deuxième direction de mouvement (94, 96).

5. Dispositif selon l'une quelconque des revendications 1 à 4, dans lequel l'unité d'évaluation protégée contre les erreurs est réalisée pour fournir un signal d'alarme si le nombre des passages de la partie de machine mobile (18) par la plage de mouvement définie dépasse une valeur définie.

6. Dispositif selon l'une quelconque des revendications 1 à 5, dans lequel l'unité d'évaluation protégée contre les erreurs (34) est réalisée pour fournir un signal de déblocage si la grandeur de mouvement soupasse une deuxième valeur seuil définie ou représente un arrêt.

7. Dispositif selon l'une quelconque des revendications 1 à 6, comprenant un codeur protégé contre les erreurs (74) pour fournir le signal de codeur avec un premier et un deuxième canal de mesure.

8. Dispositif selon la revendication 7, dans lequel le codeur protégé contre les erreurs (74) est un codeur rotatif doté d'une unité de balayage optique et/ou magnétique sur un arbre d'entraînement.

9. Dispositif selon l'une quelconque des revendications 1 à 8, dans lequel le dispositif présente un premier élément de commutation (40) et un deuxième élément de commutation (42) et le signal de coupure est fourni en fonction de la position de commutateur du premier et du deuxième élément de commutation (40, 42).

10. Dispositif selon l'une quelconque des revendications 1 à 9, dans lequel l'unité d'évaluation protégée contre les erreurs (34) est une unité d'évaluation redondante à deux canaux.

11. Dispositif selon l'une quelconque des revendications 1 à 10, dans lequel l'unité d'évaluation protégée contre les erreurs (34) présente une première et une deuxième unité de traitement (36, 38) qui produisent respectivement un signal de sortie qui représente le signal de coupure, la première et la deuxième unité de traitement (36, 38) étant réalisées pour se surveiller mutuellement.

12. Procédé de surveillance protégée contre les erreurs d'un nombre de passages d'une partie de machine mobile (18) par une plage de mouvement définie, comprenant les étapes consistant à :
- enregistrer un signal de codeur qui représente une grandeur de mouvement de la partie de machine mobile (18) au niveau d'une entrée (32) ; et
- fournir un signal de coupure protégé contre les erreurs par une unité d'évaluation protégée contre les erreurs (34) ;
**caractérisé en ce que**
l'unité d'évaluation protégée contre les erreurs (34) détermine à partir de la grandeur de mouvement un nombre des passages de la partie de machine mobile (18) par la plage de mouvement définie et fournit le signal de coupure protégé contre les erreurs si le nombre déterminé des passages de la partie de machine mobile (18) par la plage de mouvement définie dépasse une première valeur seuil définie, le nombre de passages par la plage de mouvement définie étant dépendant d'une direction de mouvement de la partie de machine mobile (18), et l'unité d'évaluation protégée contre les erreurs (34) étant en outre réalisée pour déterminer sur le plan de la sécurité une première et une deuxième direction de mouvement (94, 96) de la partie de machine mobile (18) à l'aide de la grandeur de mouvement.

13. Programme informatique comprenant du code programme qui est réalisé pour effectuer le procédé selon la revendication 12 si le code programme est exécuté sur un processeur d'un dispositif selon les revendications 1 à 11.
